Europäisches Patentamt

European Patent Office

Office européen des brevets

(19)

(11) EP 0 908 229 A1

(12) EUROPEAN PATENT APPLICATION

(43) Date of publication:
14.04.1999 Bulletin 1999/15

(51) Int Cl.⁶: **B01J 20/18**, C01B 39/06, B01D 53/94

(21) Application number: 98308178.7

(22) Date of filing: 08.10.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 09.10.1997 JP 276816/97

(71) Applicant: NGK INSULATORS, LTD.
**Nagoya City Aichi Pref. (JP)**

(72) Inventors:
• **Takahashi, Akira**
 **Ann Arbor, MI 48105 (US)**

• **Tomita, Toshihiro**
 **Nagoya-city, Aichi-prefecture 457-0006 (JP)**
• **Hiramatsu, Takuya**
 **Nagoya-city, Aichi-prefecture 468-0069 (JP)**

(74) Representative: **Paget, Hugh Charles Edward et al**
 **MEWBURN ELLIS**
 **York House**
 **23 Kingsway**
 **London WC2B 6HP (GB)**

(54) **Adsorbent for exhaust gas purification**

(57) An adsorbent for exhaust gas purification is composed of a molecular sieve having high acidic hydrothermal resistance obtained by substituting part or the whole of the Al constituting the framework of crystalline aluminosilicate molecular sieve, with the ion of at least one element selected from elements M for framework element substitution, i.e. Mg, P, Ti, Cr, Ge, Zr, In, Sn, Hf, W, V, Co, Ni, Cu, Zn, Ag and B. The adsorbent for exhaust gas purification can be suitably used in the applications requiring high heat resistance and high hydrothermal resistance, such as the exhaust gas purification system for internal combustion engine or combustion furnace. The adsorbent can be used particularly preferably for the purification of automobile exhaust gas containing hydrocarbons, nitrogen oxides, etc.

EP 0 908 229 A1

## Description

Background of the Invention

1. Field of the Invention

The present invention relates to an adsorbent for exhaust gas purification used in the exhaust gas purification systems of internal combustion engines, combustion furnaces, etc. More particularly, the present invention relates to an adsorbent having high heat resistance and high hydrothermal resistance for exhaust gas purification suitably used particularly for the purification of automobile exhaust gas containing hydrocarbons, nitrogen oxides, etc.

2. Description of Related Art

The harmful substances contained in automobile exhaust gases, such as hydrocarbons (HC), carbon monoxide (CO) and nitrogen oxides (NOx) are one cause for air pollution and acid rain. It is recognized that these harmful substances injure the health of the residents living in the vicinity of trunk roads where the volume of traffic is large. Thus, the above harmful substances are a big social problem.

In order to purify such harmful substances, automobiles are generally provided with a catalyst for exhaust gas purification, for example, a metal honeycomb or a ceramic honeycomb obtained by loading a metallic catalyst component supported on a ceramic carrier. In order for such a catalyst to exhibit its catalytic activity, it is necessary that the catalyst is heated till it reachs its activation temperature by the heat of exhaust gas, etc.

Therefore, when the temperature of exhaust gas or the temperature of the catalyst for exhaust gas purification is low as seen during the cold start of engine, the above-mentioned harmful substances are hardly purified. Since a large amount of HC is emitted during the cold start of engine, the purification of HC, in particular, is an important task to be achieved.

In order to solve this problem, there have been investigated (1) a method of using a honeycomb catalyst of heating resistor, the honeycomb catalyst is heated by electricity to reach its activation temperature before the start of engine, and (2) a method of using, in addition to a honeycomb catalyst, an HC adsorbent composed mainly by a crystalline aluminosilicate (e.g. zeolite) molecular sieve and allowing the adsorbent is to adsorb HC until the honeycomb catalyst reaches its activation temperature.

With respect to the latter method (2), for example, Japanese Patent Application Kokai (Laid-Open) No. 75327/1990 proposes a system for purification of automobile exhaust gas by the use of an HC adsorbent composed of a Y type zeolite or mordenite. Japanese Patent Application Kokai (Laid-Open) No. 293519/1992 proposes use of an adsorbent obtained by subjecting a H$^+$/ZSM-5 zeolite to ion exchange with Cu and Pd, in order to alleviate the problem of reduction in catalytic activity caused by adsorption of water and achieve improved HC adsorption capability and wider temperature range for HC adsorption. For the same purpose, Japanese Patent Application Kokai (Laid-Open) No. 63392/1994 proposes use of an adsorbent composed of a pentasil type metallosilicate subjected to ion exchange with H, Cu or Pd.

The above-mentioned zeolites used as an HC adsorbent are inferior in heat resistance, particularly heat resistance (hydrothermal resistance) in a moisture-containing atmosphere (e.g. an automobile exhaust gas), as compared with metallic or ceramic honeycomb catalysts; therefore, they have had a fear of deterioration during use at high exhaust gas temperatures such as experienced in continuous engine operation. Use of zeolite particularly in an in-line type exhaust gas purification system having no by-pass for high-temperature exhaust gas has been fairly severe to ordinary zeolites.

Adsorption of HC (e.g. toluene and xylene) contained in exhaust gas, by ordinary aluminosilicate molecular sieve composed mainly of Si, Al and O can generally be divided into two types, i.e. (1) physical adsorption (physisorption) considered to be due to van der Waals force, in which HC can adsorb up to a molecular sieve temperature of about 100°C, and (2) chemical adsorption (chemisorption) due to electron exchange between (a) the to-be-adsorbed molecule (HC) and (b) the framework elements and extra framework cations of molecular sieve, in which HC can adsorb even at temperatures of 100°C or higher.

The reason why chemisorption enables HC adsorption and storage up to high temperatures, is presumed to be as follows. That is, in the aluminosilicate molecular sieve, the tetravalent Si in O-Si-O silicate framework structure is partially substituted with trivalent Al; in order to compensate the shortage of electric charge caused by the substitution, proton and/or cations (e.g. Na ion) (these are hereinafter referred to as "cations for electric charge compensation") are present in the molecular sieve; and these cations attract electrons. In other words, the presence of Al in framework structure enables the presence of cations for electric charge compensation, and the interaction between the framework Al and the cations for electric charge compensation via oxygen atoms provides sites capable of adsorbing HC up to high temperatures.

Therefore, once dealumination at high temperatures, the presence of cations for electric charge compensation becomes impossible and, further, the ability of HC attraction via oxygen atoms disappears. Hence, when an ordinary aluminosilicate molecular sieve is used as an adsorbent for exhaust gas purification, in an automobile engine over a long period, dealumination is inevitable and, as a result, chemisorption is not expectable and only physisorption (which takes place up to about 100°C) is expectable.

As disclosed in Japanese Patent Application Kokai (Laid-Open) No. 10613/1996, cations for electric charge compensation having an electronegativity of 1.40 or more, particularly, proton and cations of Cu, Ag, Au, Pd, Fe and rare earth elements are very effective for HC adsorption and storage up to high temperatures. However, as in the case of the above ordinary aluminosilicate molecular sieve, once dealumination at high temperatures, the presence of cations for electric charge compensation (proton and cations of Cu, Ag, Au, Pd, Fe and rare earth elements) becomes impossible and their effect for HC adsorption and storage up to high temperatures decreases or disappears. Therefore, when these cations are used in an adsorbent for exhaust gas purification and the adsorbent is used in an automobile engine over a long period, HC adsorption and storage at high temperatures by adsorbent may not be expected.

Summary of the Invention

In view of the above-mentioned problems of the prior art, the present invention aims at providing an adsorbent for exhaust gas purification, which can be used in an exhaust gas purification system (e.g. an in-line type exhaust gas purification system) where high heat-resistance and high durability are required.

According to the present invention, there is provided an adsorbent for exhaust gas purification, comprising a molecular sieve having high acidic hydrothermal resistance obtained by substituting part or the whole of the Al constituting the framework of crystalline aluminosilicate molecular sieve, with the ion of at least one element selected from elements M for framework element substitution consisting of Mg, P, Ti, Cr, Ge, Zr, In, Sn, Hf, W, V, Co, Ni, Cu, Zn, Ag and B.

In the molecular sieve having high acidic hydrothermal resistance constituting the present adsorbent for exhaust gas purification, the framework structure thereof is preferably any of a BEA type, an MFI type, a FER type, an MOR type, a CHA type, a FAU type and an ERI type, with a BEA type being particularly preferred. The molecular sieve having high acidic hydrothermal resistance preferably contains, as the cation for electric charge compensation for making up the shortage of electric charge caused by the difference in valency between $Si^{+4}$ ion and the element M for framework element substitution, at least one ion selected from proton and the ions of Cu, Ag, Au, Pd, Fe and rare earth elements. As the cation for electric charge compensation, at least either of Cu ion and Ag ion is particularly preferred. The Si/M molar ratio, which is a molar ratio of the Si and the element M for framework element substitution both constituting the molecular sieve having high acidic hydrothermal resistance, is preferably 100 or less, more preferably 50 or less. The Si/Al molar ratio, which is a molar ratio of the Si and Al both constituting the molecular sieve having high acidic hydrothermal resistance, is preferably 25 or more, more preferably 50 or more.

Detailed Description of the Invention

The adsorbent for exhaust gas purification according to the present invention is constituted by a particular crystalline aluminosilicate molecular sieve obtained by substituting part or the whole of the Al constituting the framework of crystalline aluminosilicate molecular sieve, with the ion of at least one element selected from elements M for framework element substitution consisting of Mg, P, Ti, Cr, Ge, Zr, In, Sn, Hf, W, V, Co, Ni, Cu, Zn, Ag and B. This particular crystalline aluminosilicate molecular sieve containing the element M for framework element substitution is hereinafter referred to as "molecular sieve having high acidic hydrothermal resistance".

"Crystalline aluminosilicate molecular sieve" refers to a crystalline aluminosilicate zeolite which has pores different in size depending upon the kind of zeolite, whose framework is constituted by Si, Al and O, and wherein part or the whole of Al can be substituted with other element(s). A molecular sieve having high acidic hydrothermal resistance obtained by substituting part or the whole of the framework Al of crystalline aluminosilicate molecular sieve, with at least one element M for framework element substitution, also has a crystal structure of the same type as the aluminosilicate zeolite having pores different in size depending upon the kind of zeolite.

The element M for framework element substitution has been determined by selecting elements other than those having no substitutability with framework Si and framework Al or those unsuitable for use in HC adsorbent, then synthesizing various molecular sieves using the selected elements, and evaluating the molecular sieves.

The element M for framework element substitution, used in place of part or the whole of framework Al, as compared with the framework Al, is not detached from the framework of zeolite up to high temperatures; therefore, the cation for electric charge compensation (contained in the molecular sieve of the present adsorbent for making up the shortage of electric charge caused by the difference in valency between $Si^{+4}$ ion and the element for framework element substitution) can hold HC adsorption capability up to high temperatures. Further, the element M as well offers a site for attracting electrons, owing to its difference in electronegativity from Si (which is a main element constituting the framework of molecular sieve); thereby, the molecular sieve is considered to have high HC desorption temperatures.

No matter which mechanism (for HC adsorption and storage) of the above takes place, an adsorbent can be obtained which has high heat resistance and high hidrothermal resistance, particularly, high heat resistance and high hydrothermal resistance posessed by the acidic site acting as a chemisorption site. Thereby, an adsorbent can be provided which, when used for automobile exhaust gas purification, has a chemisorption site having required heat resistance and shows high (about 150 to 300°C) HC desorption temperatures even after long-term use.

The framework structure of the present molecular sieve having high acidic hydrothermal resistance is basically the same as that of a crystalline aluminosilicate molecular sieve used as a material for production of the former molecular sieve, and is preferably any of a BEA type, an MFI type, a FER type, an MOR type, a CHA type, a FAU type and an ERI type. Of these types, a BEA type is particularly preferred because (1) the pore structure is constituted by a 12-membered ring and has a large pore volume, (2) the pores are connected with each other three-dimensionally and, even if part of the pores is blocked by coking, etc., HC molecules can enter other pores, and (3) the BEA type has no supercage unlike faujasite (FAU) type or the like and has a uniform pore size, making strong the interaction between HC molecules and the zeolite framework.

Some of the above-mentioned elements M for framework element substitution has, when present in the crystal structure of molecular sieve, ionic valencies different from that of Al to be substituted. Irrespective of whether or not Al is substituted with the element M, the molar ratio of oxygen ion and cation in molecular sieve framework is kept at 2; in the whole framework structure of the present molecular sieve having high acidic hydrothermal resistance, it is presumed that the shortage of electric charge caused by the difference in valency between $Si^{+4}$ and the element M is compensated by the cation present outside the framework to assure electrical neutrality.

In the present invention, preferred as the cation for electric charge compensation contained in the molecular sieve having high acidic hydrothermal resistance obtained by framework element substitution with the element M is at least one ion selected from proton and the cations of Cu, Ag, Au, Pd, Fe and rare earth elements (these ions have excellent chemisorption capability for HC). Of these, Cu or Ag ion is particularly preferred because they have high chemisorption capability for HC and can adsorb and store HC up to high temperatures. Herein, the present molecular sieve having high acidic hydrothermal resistance containing these cations for electric charge compensation is called "ion-exchanged molecular sieve having high acidic hydrothermal resistance". Thereby, the HC storability up to high temperatures, possessed by the ions can be maintained even after the molecular sieve has been subjected to high temperatures. The reason is presumed to be that the ionic site formed as a result of the framework substitution has high heat resistance and high hydrothermal resistance and makes even higher the HC desorption temperature, which suppresses the deterioration of the HC chemisorption capability of cation for electric charge compensation.

The Si/M molar ratio, which is a molar ratio of the framework Si and the framework element M both constituting the molecular sieve having high acidic hydrothermal resistance and the ion-exchanged molecular sieve having high acidic hydrothermal resistance, is preferably 100 or less, more preferably 50 or less. When the molar ratio is large, that is, the atoms of the element M are too small, the amount of zeolite used is large, which is not preferred.

The Si/Al molar ratio, which is a molar ratio of framework Si and framework Al, is preferably 25 or more, more preferably 50 or more in view of the heat resistance and hydrothermal resistance of the molecular sieve.

The molecular sieve having high acidic hydrothermal resistance and ion-exchanged molecular sieve having high acidic hydrothermal resistance according to the present invention can be produced by any of (1) a method of adding, to raw materials, a compound of element M for framework element substitution or an element M per se and synthesizing a zeolite containing the element M as a framework element and (2) a method of synthesizing a zeolite containing no element M and then substituting part or the whole of framework Al with an element M for framework element substitution. In this case, the conditions for zeolite synthesis or the conditions for substitution with the element M must be optimized depending upon the addition amount of the element M compound or the element M per se or the desired pore structure of zeolite; therefore, it is preferred that the conditions for synthesis of a zeolite of desired pore structure or the conditions for substitution with the element M are determined beforehand for at least one formulation of raw materials.

In the above-synthesized molecular sieve of the present invention, the element M for framework element substitution may also be present on the pore or on the particle surfaces, as long as the element M of an amount sufficient for exhibiting the desired effect is present in the framework of the molecular sieve and all the pores are not blocked by the element M.

Example

The present invention is described in more detail below by way of Examples. However, these Examples are not intended to restrict the scope of the present invention.

(Examples 1 to 10 and Comparative Examples 1 to 6)

An aqueous sodium hydroxide solution was added to a colloidal silica (30% by weight). To the resulting mixture was added a material obtained by adding a compound shown in Table 1 and aluminum sulfate to an aqueous tetraethyl ammonium hydroxide (TEAOH) solution, after which stirring was conducted. The resulting reaction mixture was placed in a teflon container and heated at 135°C at an autogenic pressure for 14 days. The resulting solid reaction product was separated by the use of a centrifuge, washed, dried at 80°C, heat-treated at 500°C in air to remove the template (TEA). In Examples 1 to 5 and 7 to 9 and Comparative Examples 1, 3, 5 and 6, the obtained powder was subjected to ion exchange in an aqueous ammonium nitrate solution and then calcinated to convert into a H type. In Examples 6 and 10 and Comparative Examples 2 and 4, the above powder was subjected to ion exchange with silver nitrate, washed with deionized water, and calcinated to convert into an Ag type. Incidentally, the ion exchange ratios in Ag type are not 100% as shown in Table 1.

Table 1

| | Element M | Compound added in synthesis | Si/M molar ratio | Si/Al molar ratio | Cation for electric charge compensation | Zeolite type | HC adsorption efficiency (%) | | |
|---|---|---|---|---|---|---|---|---|---|
| | | | | | | | Adsorption temperature (°C) | | |
| | | | | | | | 100 | 200 | 300 |
| Example 1 | Ti | $Ti(NO_3)_4$ | 35 | 76 | H | BEA | 93 | 25 | 15 |
| Example 2 | Ge | $GeO_2$ | 51 | 53 | H | BEA | 85 | 18 | 5 |
| Example 3 | Mg | $MgSO_4$ | 110 | 35 | H | BEA | 84 | 65 | 8 |
| Example 4 | Zr | $Zr(SO_4)_2 \cdot 4H_2O$ | 45 | 56 | H | BEA | 91 | 71 | 7 |
| Example 5 | In | $In_2(SO_4)_3$ | 57 | 85 | H | BEA | 90 | 35 | 2 |
| Example 6 | In | $In_2(SO_4)_3$ | 57 | 85 | Ag (85%) | BEA | 92 | 82 | 73 |
| Example 7 | Sn | $SnSO_4$ | 73 | 100 | H | BEA | 95 | 28 | 5 |
| Example 8 | Zn | $ZnSO_4$ | 45 | 76 | H | BEA | 95 | 49 | 2 |
| Example 9 | B | $H_3BO_3$ | 35 | 64 | H | BEA | 97 | 53 | 8 |
| Example 10 | B | $H_3BO_3$ | 35 | 64 | Ag (92%) | BEA | 95 | 87 | 65 |
| Example 11 | Co | $CoSO_4$ | 80 | 65 | H | MFI | 76 | 30 | 5 |
| Example 12 | Ni | $Ni(NO_3)_2 \cdot 6H_2O$ | 45 | 110 | H | MFI | 78 | 28 | 0 |
| Example 13 | Ga | $Ga_2(SO_4)_3$ | 43 | 88 | H | MFI | 71 | 27 | 2 |
| Example 14 | Ga | $Ga_2(SO_4)_3$ | 43 | 88 | Cu (89%) | MFI | 77 | 50 | 66 |
| Comparative Example 1 | - | Not used | - | 52 | H | BEA | 95 | 5 | 0 |
| Comparative Example 2 | - | Not used | - | 52 | Ag (95%) | BEA | 53 | 5 | 0 |
| Comparative Example 3 | - | Not used | - | 113 | H | BEA | 89 | 2 | 0 |
| Comparative Example 4 | - | Not used | - | 124 | Ag (79%) | BEA | 69 | 3 | 0 |

Table 1   (continued)

|  | Element M | Compound added in synthesis | Si/M molar ratio | Si/Al molar ratio | Cation for electric charge compensation | Zeolite type | HC adsorption efficiency (%) | | |
|---|---|---|---|---|---|---|---|---|---|
|  |  |  |  |  |  |  | Adsorption temperature (°C) | | |
|  |  |  |  |  |  |  | 100 | 200 | 300 |
| Comparative Example 5 | Mo | $MoBr_4$ | 42 | 128 | H | AMORPHOUS | 72 | 6 | 2 |
| Comparative Example 6 | Li | $Li_2SO_4 \cdot H_2O$ | 45 | 145 | H | BEA | 95 | 7 | 1 |
| Comparative Example 7 | Ta | $TaO_2$ | 78 | 47 | H | MFI | 79 | 8 | 0 |

(Examples 11 to 14 and Comparative Example 7)

An aqueous sodium hydroxide solution was added to a colloidal silica (30% by weight). To the resulting mixture was added a material obtained by adding a compound shown in Table 1 and aluminum sulfate to an aqueous tetrapropyl ammonium bromide (TPABr) solution, after which stirring was conducted. The resulting reaction mixture was placed in a teflon container and heated to 160°C in 1 hour and to 210°C in 5 hours at an autogenic pressure, and then allowed to cool. The resulting solid reaction product was separated by the use of a centrifuge, washed, dried at 80°C, heat-treated at 500°C in air to remove the template (TPA). In Examples 11 to 13 and Comparative Example 7, the obtained powder was subjected to ion exchange in an aqueous ammonium nitrate solution and then calcinated to convert into a H type. In Examples 14, the above powder was subjected to ion exchange with copper nitrate, washed with deionized water, and calcinated to convert into a Cu type. Incidentally, the ion exchange ratio in Cu type is not 100% as shown in Table 1.

(Evaluations for HC adsorption capability)

To each of the above-produced zeolite powders shown in Table 1 were added an alumina sol (solid content = 2.5% by weight) and water. Each of the resulting mixtures was subjected to wet grinding for 20 hours by the use of a ball mill to obtain various slurries to be loaded. Then, in each slurry was dipped a cordierite honeycomb produced by NGK Insulators, ltd. [square cells, cell density = 400 cells/in.$^2$ (62 cells/cm$^2$), rib thickness = 6 mil (152 μm), honeycomb size = 1 in. (diameter) x 2 in. (length), honeycomb capacity = 26 cc] to coat the slurry the honeycomb in a loaded slurry an amount of 0.16 g/cc. The coated honeycomb was dried and fired in air at 550°C for 1 hour to obtain various samples for measurement of HC adsorption capability.
Each sample was subjected to a durability test at 850°C for 100 hours in an atmosphere containing 10% steam in an electric furnace.
Each sample was measured for HC adsorption efficiency using a model gas containing toluene as HC. The model gas simulated a representative exhaust gas emitted from actual engines during the cold start and had a composition of HC = 643 ppm, $CO_2$ = 16%, $O_2$ = 0.77%, CO = 2%, $H_2$ = 0.33%, $H_2O$ = 10%, NO = 1,500 ppm and $N_2$ = remainder. The model gas was passed through each sample (which was an HC adsorbent) maintained at 100°C, 200°C or 300°C, at a total flow rate of 17 ℓ/min, and the amount of HC discharged from the adsorbent was measured over a period of 150 seconds.
HC adsorption efficiency (%) [amount of adsorbed HC (%)] was calculated using the following formula (1):

$$\text{HC adsorption efficiency (\%)} = [(B-A)/B] \times 100 \qquad (1)$$

wherein A is the amount of HC discharged when a zeolite-loaded honeycomb (an adsorbent) was used and B is the amount of HC discharged when a zeolite-unloaded honeycomb was used.
The results of the adsorption efficiency evaluations are shown in Table 1.
When the adsorption temperature (the adsorbent temperature) was 100°C, there was no difference in HC adsorption efficiency between Examples and Comparative Examples. When the adsorption temperature was 200°C, HC adsorption efficiency was lower than 10% in Comparative Examples but, in Examples, ranged from about 20% (Example 2) to over 80% (Examples 6 and 10). When the adsorption temperature was 300°C, substantially no HC adsorption took place in Comparative Examples but, in Examples, HC adsorption efficiency of about several % was seen in many cases and HC adsorption efficiency of over 60% (i.e. good heat resistance and good hydrothermal resistance) was seen in Examples 6 and 10.
As described above, the present adsorbent for exhaust gas purification using molecular sieve having high acidic hydrothermal resistance or an ion-exchanged molecular sieve having high acidic hydrothermal resistance, as compared with conventional adsorbents for exhaust gas purification, can adsorb HC up to high temperatures, that is, desorbs the adsorbed HC at high temperatures; therefore, has excellent heat resistance and hydrothermal resistance. Because of this heat resistance and hydrothermal resistance, the present adsorbent retains HC adsorption capability even after long-term use and shows excellent durability. Therefore, the present adsorbent is very effective for reduction of the HC emitted during the cold start of automobile engine and for purification of the high-temperature exhaust gas emitted during the continuous operation of the engine.

**Claims**

1. An adsorbent for exhaust gas purification, comprising a molecular sieve having high acidic hydrothermal resistance obtained by substituting part or the whole of the Al constituting the framework of crystalline aluminosilicate molecular sieve, with the ion of at least one element selected from elements M for framework element substitution consisting of Mg, P, Ti, Cr, Ge, Zr, In, Sn, Hf, W, V, Co, Ni, Cu, Zn, Ag and B.

2. An adsorbent for exhaust gas purification according to Claim 1, wherein the framework structure of the molecular sieve having high acidic hydrothermal resistance is any of a BEA type, an MFI type, a FER type, an MOR type, a CHA type, a FAU type and an ERI type.

3. An adsorbent for exhaust gas purification according to Claim 1, wherein the framework structure of the molecular sieve having high acidic hydrothermal resistance is a BEA type.

4. An adsorbent for exhaust gas purification according to any of Claims 1 to 3, wherein the molecular sieve having high acidic hydrothermal resistance contains, as the cation for electric charge compensation for making up the shortage of electric charge caused by the difference in valency between $Si^{+4}$ ion and the element for framework element substitution, at least one ion selected from proton and the ions of Cu, Ag, Au, Pd, Fe and rare earth elements.

5. An adsorbent for exhaust gas purification according to any of Claims 1 to 3, wherein the molecular sieve having high acidic hydrothermal resistance contains at least either of Cu ion and Ag ion as the cation for electric charge compensation for making up the shortage of electric charge caused by the difference in valency between $Si^{+4}$ ion and the element M for framework element substitution.

6. An adsorbent for exhaust gas purification according to any of Claims 1 to 5, wherein the Si/M molar ratio, which is a molar ratio of the Si and the element M for framework element substitution both constituting the molecular sieve having high acidic hydrothermal resistance, is 100 or less.

7. An adsorbent for exhaust gas purification according to any of Claims 1 to 5, wherein the Si/M molar ratio, which is a molar ratio of the Si and the element M for framework element substitution both constituting the molecular sieve having high acidic hydrothermal resistance, is 50 or less.

8. An adsorbent for exhaust gas purification according to any of Claims 1 to 6, wherein the Si/Al molar ratio, which is a molar ratio of the Si and Al both constituting the molecular sieve having high acidic hydrothermal resistance, is 25 or more.

9. An adsorbent for exhaust gas purification according to any of Claims 1 to 6, wherein the Si/Al molar ratio, which is a molar ratio of the Si and Al both constituting the molecular sieve having high acidic hydrothermal resistance, is 50 or more.

10. Exhaust gas purification system for, or connected to, an internal combustion engine or a combustion furnace, having an adsorbent according to any one of claims 1 to 9.

**European Patent Office**

## EUROPEAN SEARCH REPORT

Application Number

EP 98 30 8178

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 768 111 A (CORNING INC) 16 April 1997 | 1-3,10 | B01J20/18 |
| Y | * page 3, line 3 - line 17 * | 4-6,8,9 | C01B39/06 |
| | * page 3, line 37 - line 7 * | | B01D53/94 |
| | --- | | |
| Y,D | EP 0 782 880 A (NGK INSULATORS LTD) 9 July 1997 | 4-6,8,9 | |
| | * page 5, line 14 - page 6, line 48 * | | |
| | --- | | |
| X | EP 0 321 177 A (UOP INC) 21 June 1989 | 1-3,6-9 | |
| | * page 8, line 12 - page 10, line 36 * | | |
| | --- | | |
| A | WO 96 40418 A (ASEC MANUFACTURING COMPANY) 19 December 1996 | 1,5 | |
| | * abstract * | | |
| | --- | | |
| A | PATENT ABSTRACTS OF JAPAN vol. 097, no. 008, 29 August 1997 & JP 09 099207 A (NGK INSULATORS LTD), 15 April 1997 * abstract * & DATABASE WPI Section Ch, Week 9725 Derwent Publications Ltd., London, GB; Class H06, AN 97-275800 & JP 09 099207 A (NGK INSULATORS LTD) , 15 April 1997 * abstract * | 1 | TECHNICAL FIELDS SEARCHED (Int.Cl.6) B01D B01J C01B |

The present search report has been drawn up for all claims

| Place of search | Date of completion of the search | Examiner |
|---|---|---|
| THE HAGUE | 12 January 1999 | Borello, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 0 908 229 A1

## ANNEX TO THE EUROPEAN SEARCH REPORT
## ON EUROPEAN PATENT APPLICATION NO.

EP 98 30 8178

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-1999

| Patent document cited in search report | | Publication date | Patent family member(s) | | Publication date |
|---|---|---|---|---|---|
| EP 0768111 | A | 16-04-1997 | JP | 9173827 A | 08-07-1997 |
| EP 0782880 | A | 09-07-1997 | JP | 8010566 A | 16-01-1996 |
| EP 0321177 | A | 21-06-1989 | AT | 109429 T | 15-08-1994 |
| | | | CA | 1317270 A | 04-05-1993 |
| | | | CN | 1037097 A,B | 15-11-1989 |
| | | | DE | 3850946 D | 08-09-1994 |
| | | | DE | 3850946 T | 01-12-1994 |
| | | | JP | 2006322 A | 10-01-1990 |
| | | | JP | 2083909 C | 23-08-1996 |
| | | | JP | 7108770 B | 22-11-1995 |
| | | | US | 5518708 A | 21-05-1996 |
| | | | US | 5186918 A | 16-02-1993 |
| | | | US | 5401488 A | 28-03-1995 |
| | | | US | 5366616 A | 22-11-1994 |
| WO 9640418 | A | 19-12-1996 | EP | 0830202 A | 25-03-1998 |
| | | | JP | 10510468 T | 13-10-1998 |

EPO FORM P0459

For more details about this annex : see Official Journal of the European Patent Office, No. 12/82